# EUROPÄISCHE PATENTSCHRIFT

(11) **EP 1 252 556 B1**
(45) Veröffentlichungstag und Bekanntmachung des Hinweises auf die Patenterteilung: **04.06.2003**
(21) Anmeldenummer: 00918736.0
(22) Anmeldetag: 29.01.2000
(51) Int. Cl.: G05B 23/02, G05B 17/00

(54) **VERFAHREN ZUM AUTOMATISIERTEN GENERIEREN EINER FEHLERBAUMSTRUKTUR**
METHOD FOR AUTOMATIC FAULT TREE SYNTHESIS
PROCEDE POUR GENERER, DE MANIERE AUTOMATISEE, UNE STRUCTURE ARBORESCENTE D'ERREURS

(43) Veröffentlichungstag der Anmeldung: 30.10.2002
(73) Patentinhaber: ABB Research Ltd., 8050 Zürich (CH)
(72) Erfinder: KALLELA, Jari, B-1310 La Hulpe (BE); VOLLMAR, Gerhard, D-67149 Meckenheim (DE); SZÖKE, Szaniszlo, B-5340 Gesues (BE)
(74) Vertreter: Miller, Toivo
(86) Internationale Anmeldenummer: EP0000714
(87) Internationale Veröffentlichungsnummer: WO01055806

(56) Entgegenhaltungen:
- US-A- 5 305 426
- CAMARINOPOULOS L ET AL: "EINE METHODE ZUR AUTOMATISCHEN FEHLERBAUMENTWICKLUNG. A METHOD FOR AUTOMATIC FAULT TREE SYNTHESIS" ANGEWANDTE INFORMATIK. APPLIED INFORMATICS,DE,VIEWEG UND SOHN VERLAG GMBH. BRAUNSCHWEIG, Bd. 27, Nr. 9, 1. September 1985 (1985-09-01), Seiten 389-399, XP000715927 ISSN: 0013-5704
- SURYAPRAKASA RAO KAVURI ET AL: "AN INTERRUPTION TREE MODEL TO EVALUATE SYSTEM PERFORMANCE OF INDUSTRIAL PROCESSING COMPLEX" PROCEEDINGS OF THE INTERNATIONAL CONFERENCE ON SYSTEMS, MAN AND CYBERNETICS,US,NEW YORK, IEEE, Bd. -, 14. November 1989 (1989-11-14), Seiten 1224-1225, XP000129962

## Beschreibung

Die Erfindung bezieht sich auf ein Verfahren zum automatisierten Generieren einer erweiterten und an einen Produktionsanlagentyp oder an eine spezifische Produktionsanlage angepaßten Fehlerbaumstruktur.

Das Verfahren ist geeignet zur Verwendung im Rahmen eines Systems zur Ermittlung der Effektivität (Overall Equipment Effectiveness OEE) und dabei insbesondere zur Fehlerursachenanalyse.

Unter Effektivität wird hier der Begriff "Overall Equipment Effectiveness, OEE" verstanden, der beispielsweise beschrieben ist in Robert Hansen: Learning the Power of Overall Equipment Effectivineess, im Konferenzbericht 1999 Machinery Reliability Conference and Exposition, "The Meeting of Machinery Reliability Minds", April 12-14, Chincinnati, Ohio, Seiten 19 bis 30, herausgegeben von Industrial Communications, Inc., 1704 Natalie Nehs Dr., Knoxville, TN 37931.

OEE ist demnach eine Methode zur Ermittlung einer Prozentzahl die angibt, inwieweit die jeweils tatsächliche Produktivität an eine geplante, also vorgegebene Produktivität heranreicht. OEE wird auch als Multiplikation synergetischer Parameter bezeichnet, die die "Gesundheit" eines Prozesses definieren, nämlich OEE = Verfügbarkeit x Verarbeitungsgeschwindigkeit x Qualität.

Betreiber von Produktionsanlagen sind aus wirtschaftlichen Gründen, sowie zur Sicherung der Produktqualität daran interessiert, eine im ungestörten Betrieb erreichbare Soll-Effektivität zu ermitteln und die jeweils aktuelle Effektivität damit zu vergleichen. Weicht die aktuelle Effektivität vom Sollwert ab, so bedeutet dies Produktivitätsverluste. Es ist dann zu ermitteln, welche Fehlerereignisse vorliegen und was dafür ursächlich ist. Ursachen können ihre Wurzeln im physikalischen, menschlichen oder organisatorischen Bereich haben.

Für die Analyse von Fehlern, also von Ereignissen, die das jeweilige Produktionsziel negativ beeinflussen, können unterschiedliche Methoden und Techniken eingesetzt werden. Die wichtigsten Vertreter sind FMEA (Failure Modes and Effects Analysis), Fehlerbaumanalyse, oder statistische Auswerteverfahren, wie beispielsweise die Pareto-Analyse [John Moubray, RCM2, Butterworth-Heinemann, Second Edition 1997].

Die Fehlerbaumanalyse ist grundsätzlich gut geeignet für einen Einsatz im Rahmen einer Fehlerursachenanalyse. Für eine effektive Fehlerursachenanalyse sollte allerdings ein Fehlerbaum mit gut an die Produktionsanlage angepaßter Struktur zur Verfügung stehen.

Eine solche angepaßte Fehterbaumstruktur läßt sich durch Auswertung historischer Daten aus dem Produktionsbetrieb schaffen. In einem automatisierten Produktionsbetrieb werden nämlich üblicherweise in Historiendatenbanken Informationen über längere Zeiträume hinweg gespeichert, so daß die benötigten Daten zur Verfügung stehen. Daten werden dabei entweder direkt aus der zugehörigen Produktions- und Maschinensteuerung oder aus dem Leitsystem gesammelt. Außerdem ist es möglich, daß der Maschinenoperateur Informationen über den Zustand von Produktion oder Maschine mittels eines Datenakquisitionssystems (Terminal, Barcode Reader) eingibt. Damit ist es möglich, spezielle Information zu Fehlerfällen in einer Datenbank zu speichern.

Ein Problem besteht allerdings darin, daß die Auswertung der großen Datenmenge sehr aufwendig ist. Einmal mit großem Auswerteaufwand erstellte Fehlerbäume werden deshalb im allgemeinen nicht aktualisiert, so daß ein Erfahrungsrückfluß aus dem täglichen Betrieb nicht stattfindet.

Der Erfindung liegt daher die Aufgabe zugrunde, ein Verfahren anzugeben, das es ermöglicht, ausgehend von einer allgemeinen, nicht angepaßten Fehlerbaumstruktur automatisiert eine erweiterte und an eine bestimmte Produktionsanlage angepaßte Struktur zu generieren.

Diese Aufgabe wird durch ein Verfahren zum automatisierten Generieren einer erweiterten und an einen Produktionsanlagentyp oder an eine spezifische Produktionsanlage angepaßten Fehlerbaumstruktur gelöst, das die im Anspruch 1 angegebenen Merkmale aufweist. Eine vorteilhafte Ausgestaltung ist im Anspruch 2 angegeben.

Bei diesem Verfahren werde auf der Basis vorgegebener Fehlerhypothesen Verifikations-Skripts erstellt und gespeichert, gemäß deren Anforderungen Daten aus einem Datenserver abgerufen werden, um daraus Fehlerereignisse abzuleiten. Die abgeleiteten Fehlerereignisse werden - gegebenenfalls zusammen mit zusätzlich eingegeben Fehlerereignissen in einer Fehlerdatenbank abgelegt. Ein Fehlerdaten-Klassifizierer führt in vorgegebenen Zeitabständen eine statistische Auswertung der gespeicherten Fehlerereignisse durch, und bildet seine Ergebnisse als gewichtete Fehlerursachen auf eine gespeicherte Fehlerbaumstruktur ab.

Ein wesentlicher Vorteil besteht darin, daß durch Anwendung des Verfahrens ein lernfähiges System geschaffen wird, das eine kontinuierliche Anpassung einer Fehlerbaumstruktur an jeweilige Produktionsgegebenheiten bewirkt.

Eine weitere Beschreibung der Erfindung und deren Vorteile erfolgt nachstehend anhand eines in Zeichnungsfiguren dargestellten Ausführungsbeispiels.

Es zeigen:
- Fig. 1: ein Blockschema eines Systems zur Durchführung des Verfahrens,
- Fig. 2: Schritte des Verfahrensablaufs,
- Fig. 3: ein Skript zum Verifizieren von Fehlerhypothesen,
- Fig. 4: typische Daten aus einem Steuerungssystem,
- Fig. 5: Informationen, die in der Fehlerdatenbank gespeichert werden,
- Fig. 6: eine einfache Grundstruktur eines gewichteten Fehlerbaums, und
- Fig. 7: einen automatisch erweiterten Fehlerbaum.

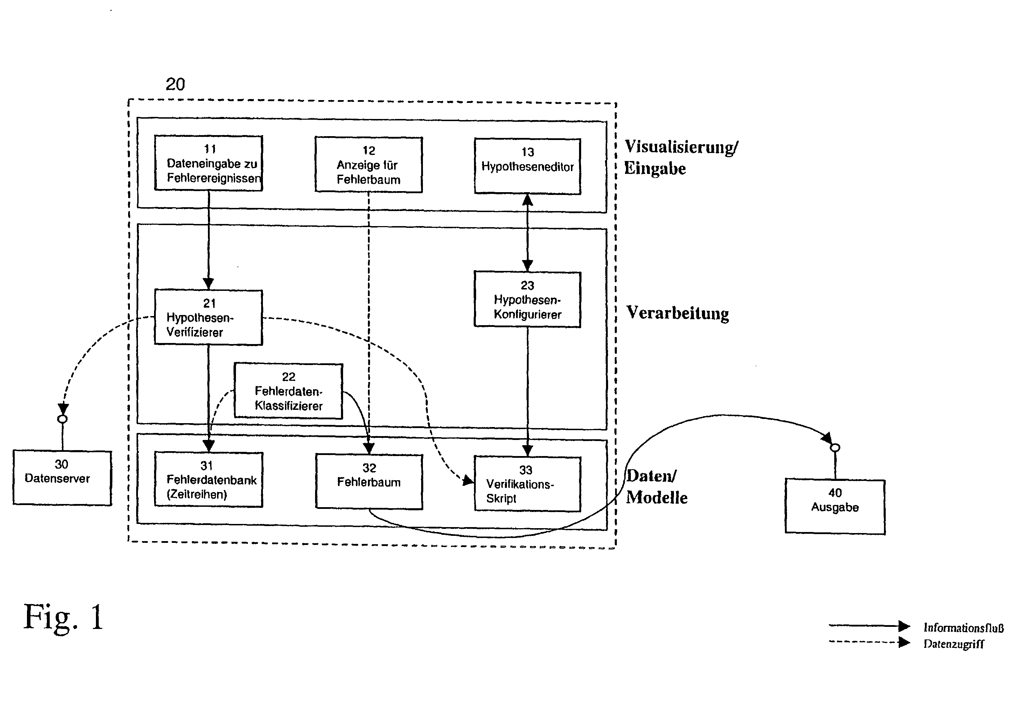

Das Blockschema gemäß Fig. 1 zeigt Komponenten einer Datenverarbeitungseinrichtung 20, die Teil eines Systems zur Ermittlung der Produktionsanlagen-Effektivität und zur Fehlerursachenanalyse sein kann. Als Software-Komponenten zur Durchführung von Verarbeitungsfunktionen sind ein Hypothesen-Verifizierer 21, ein Fehlerdaten-Klassifizierer 22 und eir Hypothesen-Konfigurierer 23 dargestellt. Als Datenspeicher sind eine Fehlerdatenbank 31, ein Fehlerbaumspeicher 32, und ein Verifikations-Skript-Speicher 33 vorhanden. Über eine Dateneingabe 11 sind Fehlerereignis-Daten eingebbar. Eine Anzeigeeinrichtung 12 ermöglicht die Darstellung von Ergebnissen. Eine Ausgabe 40 ermöglicht die Ausgabe oder Weiterleitung der generierten Fehlerbaumstruktur. Mittels eines Hypotheseneditors 13 sind Fehlerhypothesen eingebbar.

Im Fehlerbaumspeicher 32 ist vorab ein gewichteter Fehlerbaum mit einer einfachen Grundstruktur gespeichert. Die Struktur des Fehlerbaums und die Gewichtung der einzelnen Fehlerursachen werden jeweils automatisiert durch das Ergebnis der Programmabläufe verändert.

Der Hypothesen-Konfigurierer 23 ist dafür eingerichtet, aufgrund eingegebener Fehlerhypothesen ein Verifikations-Skript zu erstellen und im Verifikations-Skript-Speicher 33 zu speichern.

Der Hypothesen-Verifizierer 21 ist dafür eingerichtet, gemäß Anforderungen des Verifikations-Skripts auf Daten eines Datenservers 30 des Leitsystems der Produktionsanlage zuzugreifen und daraus Fehlerereignisse abzuleiten, wobei über die Dateneingabe 11 eingebbare Zusatzinformationen zu Fehlerereignissen berücksichtigt werden. Er legt ermittelte Fehlerereignisse in der Fehlerdatenbank 31 ab.

Der Fehlerdaten-Klassifizierer 22 ist dafür eingerichtet, in vorgebbaren Zeitabständen die Fehlerereignisse aus der Fehlerdatenbank 31 abzurufen, zu klassifizieren und als gewichtete Fehlerursachen auf die Fehlerbaumstruktur abzubilden.

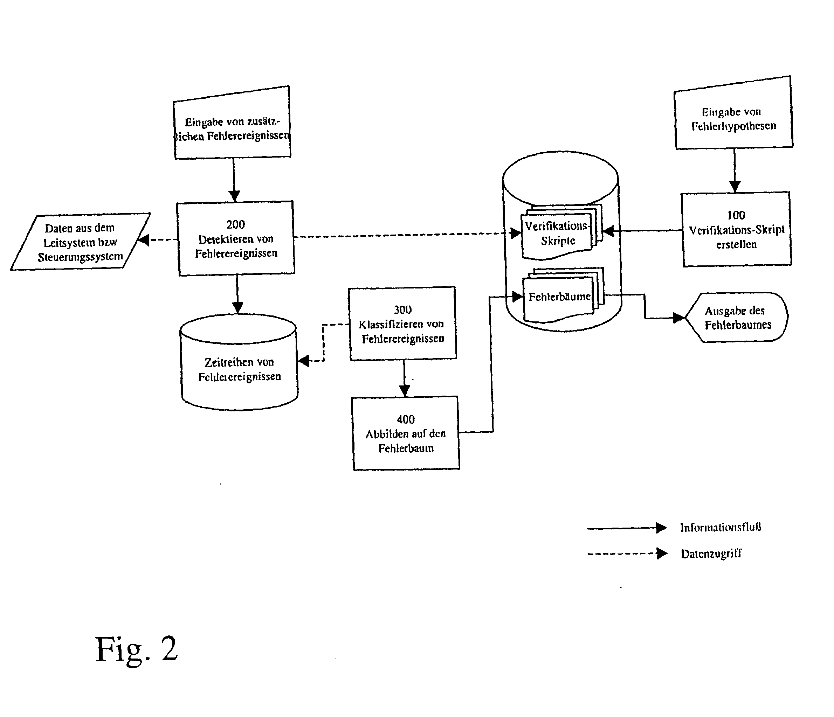

Fig. 2 zeigt die einzelnen Schritte des Verfahren zum automatisierten Generieren einer erweiterten Fehlerbaumstruktur.

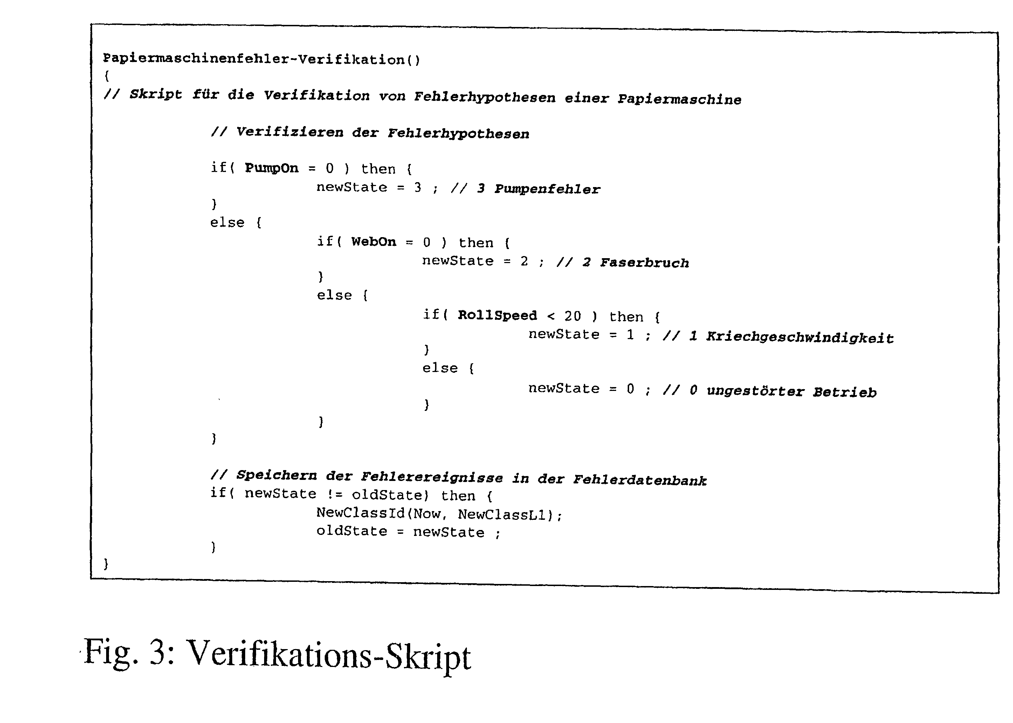

In Schritt 100 werden die Kriterien zum Verifizieren von Fehlerhypothesen eingegeben. Anhand der Kriterien wird ein ausführbares Skript erzeugt. Fig. 3 zeigt beispielhaft für drei Fehlerhypothesen ein Skript.

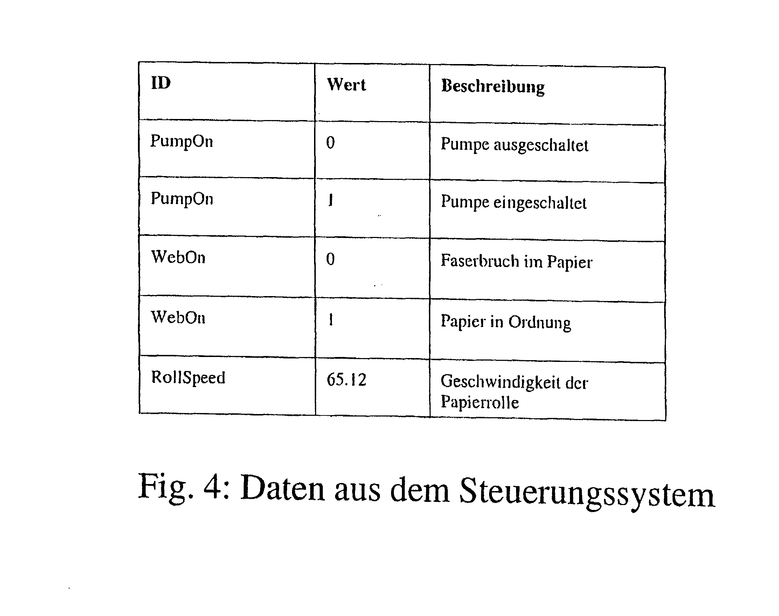

In Schritt 200 wird das Skript zyklisch auf Daten aus dem Steuerungssystem bzw. Leitsystem angewandt. Fig. 4 zeigt dazu einen typischen Datensatz. Diese Daten werden entsprechend der Kriterien des Verifikations-Skriptes überprüft. Erkannte Fehlerereignisse werden - gegebenenfalls neben zusätzlich eingegebenen Fehlerereignissen - in der Fehlerdatenbank 31 gespeichert.

Schritt 300 führt eine Klassifikation der Fehlerereignisse durch. Dies geschieht entweder automatisch in festen Zeitintervallen, beispielsweise einmal im Monat, oder der Benutzer initiiert die Klassifizierung. Die Fehlerereignisse werden hinsichtlich der Häufigkeit des Auftretens klassifiziert.

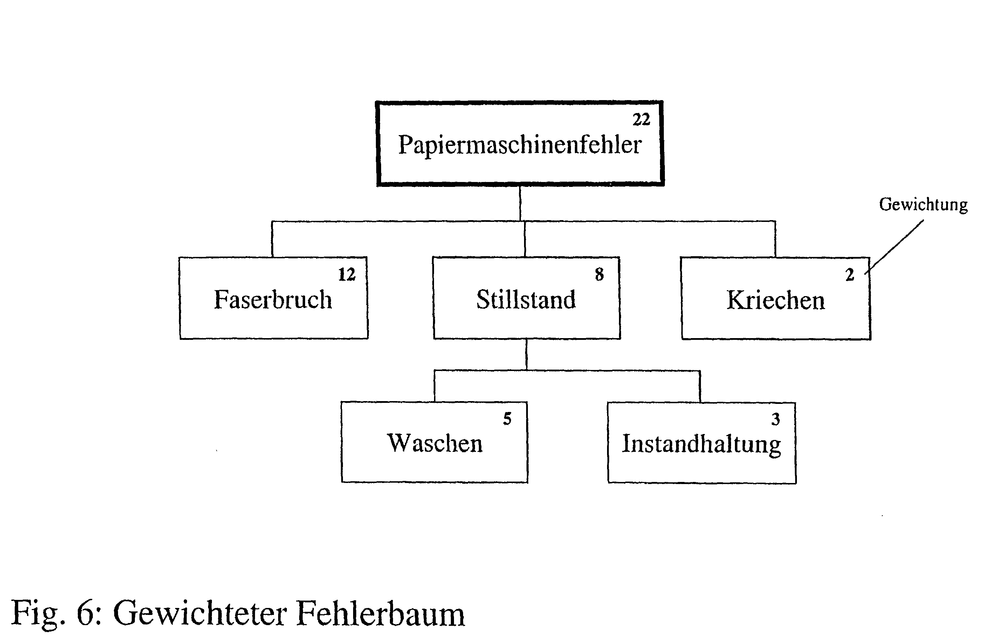

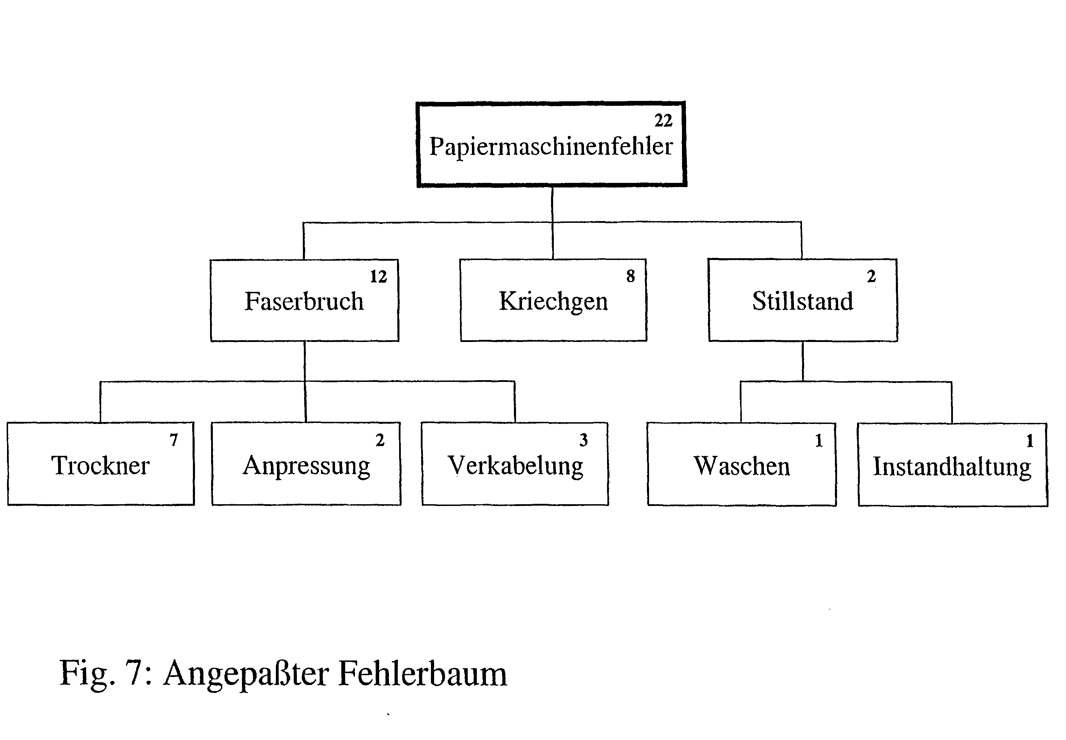

Schritt 400 bildet die Fehlerereignisse auf eine logische Baumstruktur ab. Die Fig. 6 zeigt eine Grundstruktur eines Fehlerbaumes und Fig. 7 einen erweiterten Fehlerbaum.

Fig. 3 zeigt ein Skript zum Verifizieren von Fehlerhypothesen einer Papiermaschine. Es handelt sich hierbei um die Fehlerhypothesen für einen Pumpenfehler, Paserbruch und Kriechgeschwindigkeit. Wird ein Fehler erkannt, dann schreibt das Skript eine Status-Information in die Fehlerdatenbank 31.

Fig. 4 zeigt typische Daten aus einem Steuerungssystem. Ein Datensatz besteht im einfachsten Fall aus einem ldentifikator (lD) für das Signal und seinem Wert. Je nach System können zusätzliche Informationen wie Datentyp, Beschreibungsdaten und Systemzeit zugreifbar sein. Zum Verifizieren von Fehlerhypothesen werden häufig Signale zum Status der Maschine, Zählerstände und Motordrehzahlen abgefragt. Zur Dokumentation von Störungen sind zusätzlich Meßwerte von physikalischen Größen und Fehlerzustands-Signale hilfreich.

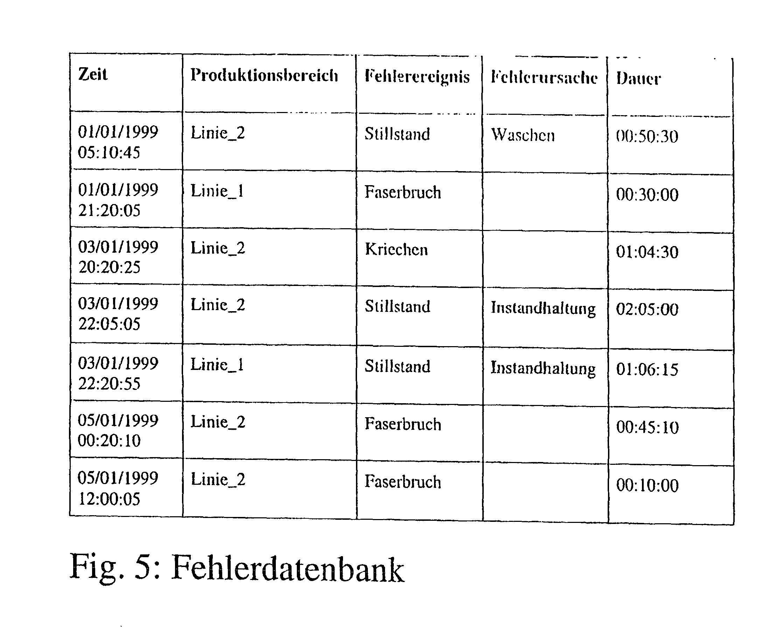

Fig. 5 zeigt beispielhaft Informationen, die in der Fehlerdatenbank gespeichert werden. Die Datensätze werden chronologisch als Historien abgelegt. Ein Datensatz besteht aus einem sog. Zeitstempel (Datum und Uhrzeit), dem Produktionsbereich, wo das Fehlerereignis aufgetreten ist, der Beschreibung des Fehlerereignisses und der entsprechenden Ereigniskategorie sowie der Dauer des Ereignisses. Zusätzlich kann vom Operateur eine Fehlerursache zum Fehlerereignis angegeben werden.

Fig. 6 zeigt die einfache Grundstruktur des gewichteten Fehlerbaums für eine Papiermaschine. Der Papiermaschinenfehler hat die Ursachen Faserbruch, Stillstand und Kriechen. Die Ursache Stillstand hat wiederum die Fehlerursachen Waschen und Instandhalten. Nach einer Klassifikation kann die Häufigkeit des Auftretens einer Fehlerursache als Gewichtung mit ausgegeben werden.

Fig. 7 zeigt den automatisch erweiterten Fehlerbaum. Die Grundstruktur liefert der Fehlerbaum aus Fig. 6. Für die Fehlerursache Faserbruch wurde ein eigenes Verifikations-Skript erzeugt. Die in diesem Skript erkannten Fehlerereignisse werden automatisch als Fehlerursachen für Faserbruch in die Fehlerbaumstruktur eingefügt.

## Patentansprüche

1. Verfahren zum automatisierten Generieren einer erweiterten und an einen Produktionsanlagentyp oder an eine spezifische Produktionsanlage angepaßten Fehlerbaumstruktur, die insbesondere im Rahmen eines Systems zur Ermittlung der Effektivität und zur Fehlerursachenanalyse verwendbar ist, wobei
a) das Generieren unter Einsatz einer Datenverarbeitungseinrichtung (20) und darin gespeicherter Programme zur Durchführung der Funktionen Hypothesen-Verifizierer (21), Fehlerdaten-Klassifizierer (22) und Hypothesen-Konfigurierer (23), sowie auf der Basis einer vorgegebenen allgemeinen hierarchischen Fehlerbaumstruktur erfolgt,
b) die Datenverarbeitungseinrichtung (20) Datenspeicher (31,32,33) enthält
- zur Speicherung von Fehlerereignissen in einer Fehlerdatenbank (31), wobei die Fehlerereignisse über eine Dateneingabe (11) eingegeben oder aus Daten ermittelt werden, die aus einem Datenserver (30) abgerufen werden, sowie
- zur Speicherung der vorgegebenen und der generierten Fehlerbaumstruktur in einem Fehlerbaumspeicher (32), und
- zur Speicherung von Verifikations-Skripts für die Verifikation von Fehlerhypothesen in einem Verifikations-Skript-Speicher (33),
a) mittels eines Hypotheseneditors (13) Fehlerhypothesen eingebbar und änderbar sind, und wobei
b) die erweiterte und angepaßte Fehlerbaumstruktur in nachstehenden Schritten erzeugt wird:
- der Hypothesen-ventizierer (21) greift auf Daten des Datenservers (30) zu, aus denen er gemäß Ausführunganforderungen des Verifikations-Skripts Fehlerereignisse ableket, und legt diese gegebenenfalls zusammen mit zuvor eingegebenen Fehlerereignissen in der Fehlerdatenbank (31) ab, und
- in vorgebbaren Zeitabständen führt der Fehlerdaten-Klassifizierer (22) unter Zugriff auf die Fehlerdatenbank (31) eine Klassifikation der Fehlerereignisse durch, bildet sie als gewichtete Fehlerursachen auf die Fehlerbaumstruktur ab und zeigt die so erweiterte Fehlerbaumstruktur mittels einer Anzeigeeinrichtung (12) an und/oder führt sie einer sonstigen Ausgabeeinrichtung (40) zu.

2. Verfahren nach Anspruch 1, **dadurch gekennzeichnet, daß** mittels des Fehlerdaten-Klassifizierers (22) in vorgebbaren Zeitabständen eine selbsttätige Überprüfung der Häufigkeit des Auftretens bestimmter Fehlerursachen durchgeführt wird, und abhängig von der damit ermittelten Fehlerursachen-Relevanz die Fehlerbaumstruktur und das Verifikations-Skript geändert werden.

## Claims

1. Method for the automated generation of an extended fault tree structure which is adapted to a production installation type or to a specific production installation and can be used in particular within a system for determining the effectiveness (Overall Equipment Effectiveness OEE) and for the analysis of causes of faults, in which method
a) the generation takes place using a data processing device (20) and programs stored in it for carrying out the functions of a hypothesis verifier (31), a fault data classifier (22) and a hypothesis configurer (23), and also on the basis of a prescribed general hierarchical fault tree structure,
b) the data processing device (20) includes data stores (31, 32, 33)
- for storing fault events in a fault database (31), the fault events being entered via a data input (11) or determined from data called up from a data server (30), and also
- for storing the prescribed fault tree structure and the generated fault tree structure in a fault tree memory (32), and
- for storing verification scripts for the verification of fault hypotheses in a verification script memory (33),
a) fault hypotheses can be entered and altered by means of a hypothesis editor (13), and in which method
b) the extended and adapted fault tree structure is produced in the following steps:
- the hypothesis verifier (31) accesses data of the data server (30), from which it derives fault events according to execution requirements of the verification script, and stores these fault events, possibly together with previously entered fault events, in the fault database (31), and
- at prescribable time intervals, the fault data classifier (22) carries out a classification of the fault events by accessing the fault database (31), maps them as weighted causes of faults onto the fault tree structure and displays the fault tree structure extended in this way by means of a display device (12) and/or feeds them to some other output device (40).

2. Method according to Claim 1, **characterized in that** automatic checking of the frequency of occurrence of certain causes of faults is carried out at prescribable time intervals by means of the fault data classifier (22) and, depending on the relevance of the causes of faults determined in this way, the fault tree structure and the verification script are altered.

## Revendications

1. Procédé pour générer de manière automatisée une arborescence de défaillances étendue, adaptée à un type d'installation de production ou à une installation de production spécifique, qui soit utilisable notamment dans le cadre d'un système de détermination de l'efficacité et d'analyse des causes des défaillances, dans lequel
a. la génération a lieu en utilisant une installation de traitement de données (20) et des programmes stockés dans celle-ci pour l'exécution des fonctions vérificateur d'hypothèses (21), classificateur de données de défaillances (22) et configurateur d'hypothèses (23), ainsi que sur la base d'une arborescence de défaillances hiérarchique, générale, prédéterminée,
b. l'installation de traitement de données (20) contient des mémoires (31, 32, 33)
- pour mémoriser des défaillances dans une banque de données de défaillances (31), les défaillances étant entrés par l'intermédiaire d'une entrée de données (11) ou étant déterminées sur la base de données appelées d'un serveur de données (30),
- l'arborescence de défaillances prédéterminée et l'arborescence de défaillances générée (32), et
- pour mémoriser des scripts de vérification, pour la vérification d'hypothèses de défaillances dans une mémoire de scripts de vérification (33),
c. des hypothèses de défaillances peuvent être entrées et modifiées au moyen d'un éditeur d'hypothèses (13) et
d. l'arborescence de défaillances élargie et adaptée est produite au cours d'étapes suivantes
- le vérificateur d'hypothèses (21) consulte les données du serveur de données (30), à partir desquelles, conformément à des exigences d'exécution du script de vérification, il déduit des défaillances et les inscrit dans la banque de données de défaillances (31), éventuellement avec des défaillances entrées précédemment et
- à intervalles de temps prédéterminés le classificateur de données de défaillances (22), procède à une classification des défaillances en se référant à la banque de défaillances (31), les reproduit en tant que causes de défaillances pondérées sur l'arborescence et affiche l'arborescence de défaillances ainsi élargie au moyen d'un dispositif d'affichage (12) et/ou las transmet à un dispositif de sortie (40) autre.

2. Procédé selon la revendication 1, **caractérisé en ce qu'**à l'aide du classificateur de données de défaillances (22), on procède, à intervalles prédéterminés, à un examen automatique de la fréquence d'apparition et en fonction de la pertinence de la cause de défaillance déterminée l'arborescence de défaillance et le script de vérification sont modifiés.
